# EUROPÄISCHE PATENTSCHRIFT

(11) **EP 3 074 740 B1**
(45) Veröffentlichungstag und Bekanntmachung des Hinweises auf die Patenterteilung: **27.07.2022**
(21) Anmeldenummer: 14766663.0
(22) Anmeldetag: 10.09.2014
(51) Int. Cl.: G01J 5/04, G01J 5/10, G01J 5/60, F21V 29/00

(54) **LEUCHTE UND VERFAHREN ZUR TEMPERATURÜBERWACHUNG**
LIGHT FIXTURE AND TEMPERATURE MONITORING METHOD
LUMINAIRE ET PROCÉDÉ DE SURVEILLANCE DE TEMPÉRATURE

(30) Priorität: 29.11.2013 DE 102013018120
(43) Veröffentlichungstag der Anmeldung: 05.10.2016
(73) Patentinhaber: Eaton Intelligent Power Limited, Dublin 4 (IE)
(72) Erfinder: OTT, Toni, 69151 Neckargemünd (DE)
(74) Vertreter: Novagraaf Group
(86) Internationale Anmeldenummer: PCT/EP2014/002452
(87) Internationale Veröffentlichungsnummer: WO 2015/078537

(56) Entgegenhaltungen:
- EP-A2- 0 516 398
- WO-A1-2006/025019
- US-A1- 2008 062 404
- US-A1- 2009 072 119
- US-A1- 2010 084 979
- US-A1- 2013 181 611
- Xiang Zhou ET AL: "Communications Real-Time Observation of Temperature Rise and Thermal Breakdown Processes in Organic LEDs Using an IR Imaging and Analysis System**", Advanced Materials, Bd. 12, Nr. 4 31. Dezember 2004 (2004-12-31), XP055154029, Weinheim, DE Gefunden im Internet: URL:http://www.physics.fudan.edu.cn/tps/pe ople/xyhou/papers/AM12_00265.pdf [gefunden am 2014-11-19]
- YUNG K C ET AL: "Thermal performance of high brightness LED array package on PCB", INTERNATIONAL COMMUNICATIONS IN HEAT AND MASS TRANSFER, PERGAMON, NEW YORK, NY, US, Bd. 37, Nr. 9, 1. November 2010 (2010-11-01), Seiten 1266-1272, XP027417894, ISSN: 0735-1933 [gefunden am 2010-10-13]

## Beschreibung

Die Erfindung betrifft eine Leuchte mit zumindest einer LED (lichtemittierende Diode) als Leuchtmittel. Eine solche LED weist einen begrenzten Lichtabstrahlwinkel für abgegebene Lichtstrahlung auf.

Ein entsprechender Abstrahlwinkel beträgt bei einer LED beispielsweise 15° und 120°, wobei der Abstrahlwinkel in der Regel durch eine kleine Linsenstruktur der LED festgelegt ist. Bei solchen Leuchtmitteln ist zu beachten, dass zwar der Wirkungsgrad relativ groß ist, allerdings auch bei LEDs nur beispielsweise max. 20% der eingesetzten Energie in sichtbares Licht umgewandelt wird. LEDs zu eigen ist, dass das bei der Umwandlung erzeugte Nutzspektrum sehr eng begrenzt ist und im infraroten Bereich keine Strahlungsanteile bereitstellt. Der Rest der eingesetzten Energie wird in Wärme umgewandelt. Um die LED durch die erzeugte Wärme nicht zu schädigen, wird diese in der Regel durch Kühlkörper, aktive Kühlung, Flüssigkeitskühlung oder dergleichen abgeführt. Ansonsten würde die Lebensdauer der LED und auch deren Lichtausbeute durch die hohe Wärmeeinwirkung negativ beeinflusst oder reduziert. In der Regel kann gesagt werden, dass bei Temperaturen von 120°C oder mehr ein entsprechender Halbleiterkristall der LED geschädigt wird und so zu bleibenden Beeinträchtigungen von Lebensdauer, Lichtfarbe, Lichtausbeute und anderen Beeinträchtigungen der LED führt. Dabei betrifft der Abstrahlwinkel einen Winkel des aus dem Leuchtmittel austretenden Lichtkegels, der zur wirksamen Beleuchtung eingesetzt werden kann, auch Wirklichtstrom genannt.

Vorrichtungen und Verfahren zur Überwachung von Leuchtmitteln offenbaren die EP 0 516 398 A2, die US 2008/0062404 A1, die US 2009/0072119 A1, die US 2010/0084979 A1, die US 2013/0181611 A1 und die WO 2006/025019 A1.

Der Erfindung liegt daher die Aufgabe zugrunde, eine Temperaturüberwachung der LED zur Vermeidung entsprechender Schäden berührungslos zu ermöglichen. Besonders vorteilhaft ist die durch das gewählte, spektralabhängige Verfahren, mögliche Einbringen des Sensors in den Wirklichtstrom der LED.

Diese Aufgabe wird durch die Merkmale des Patentanspruchs 1 bzw. durch die Verfahrensmerkmale nach Patentanspruch 12 gelöst.

Erfindungsgemäß weist die Leuchte einen Infrarotsensor innerhalb des Lichtabstrahlwinkels, bzw. Wirklichtstromes des Leuchtmittels auf, der dem Leuchtmittel zur berührungslosen Bestimmung von dessen Temperatur zugeordnet ist.

Da der Infrarotsensor direkt im Lichtabstrahlbereich des Leuchtmittels angeordnet ist, soll eine Erwärmung des Infrarotsensors durch das sichtbare Licht vermieden werden. Dies wird durch eine entsprechende Abschirmung in Form von dichroitischen Spiegeln oder Filtern erreicht. Solche werden auch als Kaltlichtfilter oder -spiegel bezeichnet, da sie sichtbares Licht reflektieren, aber Infrarotstrahlung durchlassen.

Die dichroitischen Spiegel oder Filter können in Form eines dichroitischen Glases oder Quarzes oder als entsprechende dichroitische Schichten angeordnet sein.

Um Umgebungswärmestrahlung zu berücksichtigen, ist dem Infrarotsensor ein zweiter Infrarotsensor zur Ermittlung und Kompensation der Umgebungswärmestrahlung zugeordnet. Der zweite Infrarotsensor ist in Richtung Umgebung gerichtet und ermittelt die die Leuchte bzw. das Leuchtmittel erreichende Umgebungswärmestrahlung, wie beispielsweise Sonnenstrahlung.

Verfahrensmäßig wird der Infrarotsensor innerhalb des Wirklichtstromes des Leuchtmittels angeordnet, eine Wärmestrahlung des Leuchtmittels mittels des Infrarotsensors gemessen, und das Infrarotsensorsignal zur Temperaturbestimmung des Leuchtmittels ausgewertet.

Die durch den zweiten Infrarotsensor ermittelte die Leuchte bzw. das Leuchtmittel erreichende Umgebungswärmestrahlung wird erfasst und zur Kompensation der Temperaturmessung des Leuchtmittels mittels des anderen Infrarotsensors verwendet.

Durch die Anordnung des Infrarotsensors innerhalb des entsprechenden Wirklichtstromes wird von dem Infrarotsensor vom Leuchtmittel abgegebene Wärmestrahlung direkt innerhalb des Abstrahlbereichs für sichtbares Licht erfasst. Dazu sei angemerkt, dass bei Erwärmen eines üblichen Körpers sich eine sogenannte Schwarzkörperstrahlung ergibt, die ein sehr charakteristisches Spektrum aufweist, das einzig von der Temperatur des entsprechenden Körpers abhängt. Unterhalb von 600°C ist die Schwarzkörperstrahlung im infraroten Bereich des Spektrums und nicht sichtbar. Weiterhin wird die Schwarzkörperstrahlung in einem breiten Bereich abgegeben, der über den entsprechenden Lichtabstrahlwinkel hinausgeht. Theoretisch wird die Schwarzkörperstrahlung in den gesamten Raum um den entsprechend erwärmten Körper abgegeben.

In der Regel ist auf der der Lichtabstrahlrichtung gegenüberliegenden Seite des Leuchtmittels ein Kühlkörper oder dergleichen angeordnet sodass der Infrarotsensor, auf der anderen Seite in Lichtabstrahlrichtung angeordnet ist. Auf diese Weise ist sichergestellt, dass Wärmestrahlung vom Leuchtmittel ohne Beeinflussung des Kühlkörpers erfasst wird.

In der Regel weist eine entsprechende Leuchte nicht nur eine LED, sondern mehrere diese Leuchtmittel auf. D. h., ein entsprechendes Leuchtmittel gemäß Erfindung kann ein LED-Strahler, ein LED-Spot, LED-Strip, ein LED-Leuchtband oder dergleichen sein. In diesem Zusammenhang kann es ausreichend sein, wenn nur eine LED der verwendeten LEDs mittels des Infrarotsensors überwacht wird. Es ist allerdings auch vorstellbar, dass zwei oder mehr Infrarotsensoren entsprechend verteilt um das gegebenenfalls aus einer Vielzahl von LED bestehende Leuchtmittel angeordnet sind.

Um innerhalb der Leuchte oder zumindest nahe bei der Leuchte direkt eine Auswertung der Wärmestrahlung vornehmen zu können, kann der Infrarotsensor mit einer Auswerte-/Steuereinrichtung zur Temperaturbestimmung und Steuerung des Leuchtmittels verbunden sein. D. h., durch diese Auswerte-/Steuereinrichtung kann die Temperatur aus dem entsprechenden Infrarotsensorsignal bestimmt werden und gegebenenfalls angezeigt oder an eine entfernte Stelle übermittelt werden. Weiterhin kann die Auswerte-/Steuereinrichtung auch zur Steuerung des Leuchtmittels eingesetzt sein. Eine solche Steuerung kann beispielsweise dann von Vorteil sein, wenn der Auswerte-/Steuereinrichtung ein maximaler Temperaturgrenzwert als Abschaltwert vorgegeben ist. Wird bei der Temperaturbestimmung eine Temperatur höher als dieser maximale Temperaturgrenzwert ermittelt, wird eine entsprechende Information übermittelt, welche beispielsweise ein Abschalten des Leuchtmittels oder der gesamten Leuchte durch einen geeigneten Aktuator zur Folge halt.

In diesem Zusammenhang sei weiterhin angemerkt, dass eine Temperaturerhöhung des Leuchtmittels auch ohne dessen Betrieb stattfinden kann, indem beispielsweise die Leuchte und insbesondere das Leuchtmittel einer externen Strahlung, wie Sonnenstrahlung, ausgesetzt sind. Bei entsprechenden Außenleuchten ist z. B. im Sommer festgestellt worden, dass allein durch Sonnenschein Temperaturen von mehr als 70°C auftreten können. Auch bei Messung einer solchen Temperatur kann mittels der Auswerte-/Steuereinrichtung beispielsweise eine Zwangskühlung/Reduzierung des Leistungsumsatzes des Leuchtmittels oder der gesamten Leuchte eingeleitet werden.

Eine Wichtung der Messungen der Wärmestrahlung bei dem dem Leuchtmittel zugeordneten Infrarotsensor und dem der Umgebung zugeordneten Infrarotsensor erfolgen, die beispielsweise sonnenstandsabhängig oder in anderer Weise sich ändernder Umgebungswärme berücksichtigt.

Verfahrensmäßig sei noch kurz darauf hingewiesen, dass entsprechend, siehe auch die obigen Ausführungen, ein Abschalten des Leuchtmittels durch insbesondere die Auswerte-/Steuereinrichtung erfolgen kann, wenn der gemessene Temperaturwert einen vorgegebenen maximalen Temperaturgrenzwert überschreitet. Alternativ kann ein Anpassen der Leistung erfolgen, bis ein zulässiger Wert der Wärmestrahlung detektiert wird. Ein Fehlerverhalten des LED kann dadurch erkannt werden, dass beispielsweise das emittierte Lichtspektrum in einem abweichenden Verhältnis zum Infrarotspektrum bei einer gewissen Umgebungstemperatur steht.

Außerdem kann ein entsprechendes Abschirmen des Infratorsensors gegenüber Umgebungswärmestrahlung beispielsweise durch einen Kühlkörper oder dergleichen erfolgen. In manchen Fällen kann auch die Anordnung einer entsprechenden Folie ausreichend sein.

Weiterhin kann es als günstig angesehen werden, wenn zumindest einer der verwendeten Infrarotsensoren verstellbar angeordnet ist. Das heißt, er kann ggf. einem anderem Leuchtmittel zugeordnet werden oder in seiner Ausrichtung zum Leuchtmittel variiert werden, falls dies durch Temperaturverteilungen innerhalb der Leuchte, Erzeugung von Wärme durch verschiedene Leuchtmittel oder auch durch externe Wärmestrahlung bedingt ist.

Dies kann selbstverständlich auch für alle verwendeten Infrarotsensoren gelten.

Im Folgenden wird ein vorteilhaftes Ausführungsbeispiel der Erfindung anhand der in der Zeichnung beigefügten Figuren näher erläutert.

Es zeigen:
- Figur 1: ein Diagramm zur Darstellung der Intensität in Abhängigkeit von der Wellenlänge für Lichtstrahlung und Wärmestrahlung,
- Figur 2: eine prinzipielle Darstellung einer Leuchte mit Infrarotsensor gemäß Erfindung.

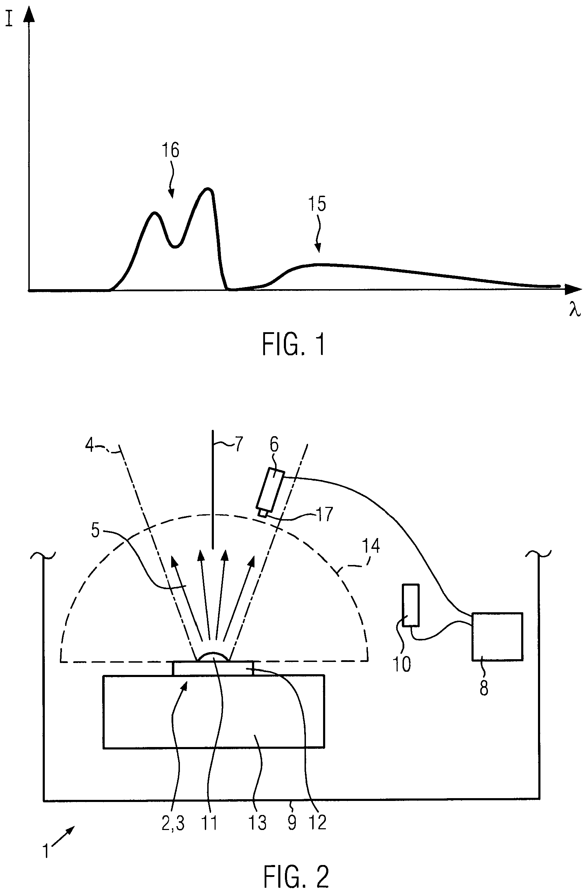

In Figur 1 ist ein Diagramm zur Darstellung der Intensität in Abhängigkeit von der Wellelänge für Lichtstrahlung, siehe Bezugszeichen 14, und Wärmestrahlung, siehe Bezugszeichen 15, dargestellt. Die Lichtstrahlung bei LEDs liegt hauptsächlich im Bereich des sichtbaren Lichts, d.h. die Lichtstrahlung hat Wellenlängen im Bereich von ungefähr 480 nm bis zu 680 nm. Die entsprechende Spektralverteilung kann insbesondere je nach Art der verwendeten LEDs und deren Lichtfarbe auch einen anderen Bereich der Spektralverteilung des sichtbaren Lichts abdecken. Die entsprechende Wärmestrahlung ist, siehe auch die obigen Ausführungen, im Infrarotbereich und weist beispielsweise bei einer Körpertemperatur von 297°C ein Intensitätsmaximum bei einer Wellenlänge von 5 µm auf. Auf jeden Fall liegt die entsprechende Wellenlänge für die gemäß Erfindung zu beachtenden Temperaturen im infraroten Bereich.

Der verwendete Infrarotsensor weist ggf. eine Höchstempfindlichkeit in dem entsprechenden Infrarotbereich auf, wobei zur Abschirmung der vom Leuchtmittel abgegebenen Lichtstrahlen entsprechende dichroitische Filter oder Spiegel, d.h. sogenannte Kaltlichtfilter oder -spiegel eingesetzt werden, die dem Infrarotsensor in Richtung Leuchtmittel vorgeordnet sind. Diese sind analog zum Infrarotsensor relativ klein mit geringen Abmessungen, sodass sowohl durch die Anordnung des Infrarotsensors als auch durch die Verwendung solcher Kaltlichtfilter/-spiegel keine oder nur eine zu vernachlässigende Beeinträchtigung der Lichtabgabe der entsprechenden Leuchte verursacht wird. Alternativ kann der Infrarotsensor als 2-Strahl- oder Verhältnis-Pyrometer ausgeführt sein, welches eine Verschiebung der Infrarotverteilung messen kann und hierdurch die Erwärmung genauer bestimmen kann.

In Figur 2 ist ein teilweiser Schnitt durch eine Leuchte 1 mit erfindungsgemäßer Temperaturbestimmung des Leuchtmittels prinzipiell dargestellt. Die Leuchte 1 ist mit Leuchtengehäuse 9 und darin angeordnetem Leuchtmittel 3 dargestellt. Beispielsweise ist eine entsprechende Lichtaustrittsöffnung der Leuchte bzw. des Leuchtengehäuses nicht weiter dargestellt. Diese kann allerdings in üblicher Weise in Richtung der von dem Leuchtmittel 3 abgegebenen Lichtstrahlen angeordnet sein. Außerdem ist in Figur 1 nur ein Leuchtmittel in Form einer lichtemittierenden Diode (LED) 2 dargestellt. Selbstverständlich können auch mehrere solcher LEDs in Form eines Stripes oder Leuchtbandes angeordnet sein.

Die LED 2 besteht in der Regel aus einer Leiterplatte 12 mit dem entsprechenden Halbleiter und einer Linseneinrichtung 11 zur Zerstreuung oder Sammlung von abgegebenem Licht. Durch die LED2 werden die entsprechenden Lichtstrahlen 5 in einem bestimmten Raumbereich abgegeben, der durch den dargestellten Abstrahlwinkel 4 bestimmt ist. Dieser beträgt je nach LED und entsprechender Linseneinrichtung 11 beispielsweise zwischen 15° und 120°. Durch den entsprechenden Abstrahlwinkel 4 wird eine mittlere Abstrahlrichtung 7 festgelegt, die in der Regel senkrecht vom Leuchtmittel 3 absteht.

Bei Einsatz des Leuchtmittels oder auch bei Bestrahlung des Leuchtmittels von außen, siehe beispielsweise Sonneneinstrahlung, erhöht sich die Temperatur der LED. Dabei ist zu beachten, dass beispielsweise die Lichtstrommenge einer LED stark von der Sperrschicht-Temperatur abhängt. Je höher die Temperatur der LED, desto geringer der Lichtstrom, desto geringer die Lebensdauer, und auch eine Änderung der Lichtfarbe kann sich ergeben. Zur entsprechenden Kühlung ist der LED eine Kühleinrichtung 13 zugeordnet, die beispielsweise durch einen gerippten Kühlkörper, eine aktive Kühlung ggf. auch mit Kühlflüssigkeit oder dergleichen realisiert sein kann. Erwärmt sich die LED, entspricht sie im Wesentlichen einem schwarzen Körper, der bei Erwärmung eine entsprechende Schwarzkörperstrahlung zusätzlich zur eigentlichen Lichtstrahlung abgibt. Eine solche Schwarzkörperstrahlung weist ein sehr charakteristisches Spektrum auf, siehe Figur 1, das einzig von der Temperatur des entsprechenden Körpers abhängt.

Dem Leuchtmittel 2 ist erfindungsgemäß ein Infrarotsensor 6 zugeordnet, der diese Schwarzkörperstrahlung im Infrarotbereich erfasst.

Durch die Anordnung der Kühleinrichtung 13 wird die entsprechende Schwarzkörperstrahlung, die der Temperatur des Leuchtmittels 2 entspricht, im Wesentlichen nur im oberen Halbraum oberhalb der Kühleinrichtung 13 abgegeben, siehe hier Bezugszeichen 14, das den Abstrahlwinkel der Schwarzkörperstrahlung bezeichnet.

In dem Bereich dieses Abstrahlwinkels ist der Infratorsensor 6 angeordnet, so dass durch diesen die Temperatur des Leuchtmittels 2 detektiert werden kann.

Dabei ist der Infratorsensor 6 so angeordnet, dass er im Abstrahlbereich der Schwarzkörperstrahlung, das heißt der Wärmestrahlung, und weiterhin im Bereich der Lichtstrahlung, siehe den entsprechenden Abstrahlwinkel 4, angeordnet ist. Bevorzugt kann eine Anordnung des Infrarotsensors 6 im Randbereich des Abstrahlwinkels 4 sein.

Der Infrarotsensor 6 ist mit einer Auswerte-/Steuereinrichtung 8 verbunden. Durch diese werden die entsprechenden Infrarotsensorsignale empfangen und in Temperaturwerte umgewandelt. Die entsprechenden Temperaturwerte werden insbesondere mit einem maximalen Temperaturgrenzwert verglichen. Überschreitet die erfasste Temperatur des Leuchtmittels 2 diesen maximalen Temperaturgrenzwert, kann die Leuchte und insbesondere das Leuchtmittel durch die Auswerte-/Steuereinrichtung abgeschaltet werden.

Es wurde bereits darauf verwiesen, dass sich das Leuchtmittel 2 auch passiv durch von außen einfallende Strahlung, beispielsweise Sonnenstrahlung, erwärmen kann. Diese Erwärmung kann zu Beeinträchtigungen des Leuchtmittels führen, wodurch dessen Einsatz gefährdet ist. Auch in diesem Fall kann die Temperatur durch den Infrarotsensor 6 erfasst werden und ggf. durch die Auswerte-/Steuereinrichtung eine aktive Kühlung des Leuchtmittels initiiert werden.

Die von außen einfallende Wärmestrahlung entspricht einer Umgebungswärmestrahlung, die bei der Temperaturmessung des Leuchtmittels abgeschirmt oder berücksichtigt werden muss. Zum Ausschalten dieser Umgebungswärmestrahlung kann beispielsweise dem Infrarotsensor 6 eine Abschirmung in Form einer Abdeckung, einer Folie, eines Kühlkörpers oder dergleichen zugeordnet sein. Dadurch ist sichergestellt, dass diese Umgebungswärmestrahlung nicht direkt den Infrarotsensor 6 erreicht. Zur Abschirmung von Lichtstrahlung vom Leuchtmittel 2, 3 ist zwischen diesem und dem Infrarotsensor 6 ein dichroitischer Filter oder dichroitischer Spiegel 17 angeordnet, der sichtbares Licht reflektiert und Infrarotstrahlung zum Infrarotsensor 6 durchlässt.

Es besteht ebenfalls die Möglichkeit, dass solche Umgebungswärmestrahlung durch einen weiteren zweiten Infrarotsensor 10 erfasst wird. Dieser ist in Richtung der Umgebungswärmestrahlung gerichtet und erfasst diese. Durch die Messwerte beider Infrarotsensoren 6 und 10 kann dann eine Kompensation der Umgebungswärmestrahlung bei der Ermittlung der Temperatur des Leuchtmittels erfolgen. Beide Infrarotsensoren übermitteln entsprechende Sensorwerte an die Auswerte-/Steuereinrichtung 8.

Es sei noch angemerkt, dass in Figur 1 im Wesentlichen nur ein Leuchtmittel, und nur ein Infrarotsensor 6 bzw. Infrarotsensor 10 dargestellt sind. Selbstverständlich können auch mehrere Leuchtmittel mit jeweils nur einem Infrarotsensor 6, oder auch in Kombination mit mehreren solcher Infrarotsensoren 6 verwendet werden. Dies gilt analog auch für den zweiten Infrarotsensor 10, der beispielsweise ebenfalls mehrfach vorhanden sein kann, um aus unterschiedlichen Bereichen einfallende Umgebungswärmestrahlung zu erfassen.

Erfindungsgemäß erfolgt eine sichere Feststellung der Temperatur des entsprechenden Leuchtmittels, um beispielsweise eine Überhitzung desselben zu verhindern. Dadurch wird die Lichtabgabe, Lebensdauer und auch die Lichtfarbe vor einer negativen Beeinflussung durch Überhitzung des Leuchtmittels geschützt. Eine solche Temperaturmessung ist in explosionsgefährdeten Bereichen insbesondere von Vorteil, um eine Zündung durch ein überhitztes Leuchtmittel zu vermeiden.

## Patentansprüche

1. Leuchte (1) mit zumindest einer lichtemittierenden Diode (LED) (2) als Leuchtmittel (3), welche LED (2) einen begrenzten Lichtabstrahlwinkel (4) für abgegebene Lichtstrahlen aufweist, wobei:
die Leuchte einen Infrarotsensor (6) aufweist, der innerhalb des Lichtabstrahlwinkels angeordnet und zur Bestimmung einer Temperatur des Leuchtmittels (3) diesem zugeordnet ist,
der Infrarotsensor ( 6 ) gegenüber Lichtstrahlung des Leuchtmittels mittels einer Abschirmeinrichtung abgeschirmt ist, und die Abschirmeinrichtung einen dichroitischen Spiegel oder Filter aufweist, und
dem Infrarotsensor ( 6 ) ein zweiter Infrarotsensor ( 10 ) zur Ermittlung und Kompensation der Umgebungswärmestrahlung zugeordnet ist;
wobei der zweite Infrarotsensor (10) in Richtung der Umgebungswärmestrahlung gerichtet ist und diese erfasst.

2. Leuchte nach Anspruch 1, wobei der Infrarotsensor (6) in einem Randbereich des Lichtkegels oder Wirklichtstromes in Richtung Leuchtmittel ( 3 ) gerichtet ist.

3. Leuchte nach Anspruch 1 oder 2, wobei das Leuchtmittel (3 ) ein LED-Strahler, ein LED-Spot, ein LED-Stripe, ein LED-Leuchtband oder dergleichen ist.

4. Leuchte nach einem der vorangehenden Ansprüche, wobei der Infrarotsensor ( 6 ) mit einer Auswerte-/Steuereinrichtung ( 8 ) zur Temperaturbestimmung und Steuerung des Leuchtmittels verbunden ist.

5. Leuchte nach einem der vorangehenden Ansprüche, wobei der Infrarotsensor ( 6 ) in einem Leuchtengehäuse ( 9 ) der Leuchte (1) angeordnet ist.

6. Leuchte nach einem der vorangehenden Ansprüche, wobei der Auswerte-/Steuereinrichtung ( 8 ) ein maximaler Temperaturgrenzwert als Abschaltwert vorgegeben ist.

7. Leuchte nach einem der vorangehenden Ansprüche, wobei nach Messung einer vorgegebenen Temperatur eine Leistungsreduzierung der Leuchte zur Abdeckung der Temperatur durchführbar ist.

8. Leuchte nach einem der vorangehenden Ansprüche, wobei der Infrarotsensor ( 6 ) gegenüber Umgebungswärmestrahlung mittels einer Abschirmeinrichtung abgeschirmt ist.

9. Leuchte nach Anspruch 8, wobei die Abschirmeinrichtung einen Reflektor aufweist.

10. Leuchte nach einem der vorangehenden Ansprüche, wobei der Infrarotsensor ( 6, 10 ) verstellbar angeordnet ist.

11. Leuchte nach einem der vorangehenden Ansprüche, wobei der Infrarotsensor ( 6 ) ein Verhältnis- oder 2-Strahl-Pyrometer ist.

12. Verfahren zur Temperaturüberwachung einer LED ( 2 ) als Leuchtmittel ( 3 ) einer Leuchte (1), wobei die Leuchte einen Infrarotsensor (6) aufweist, der innerhalb eines Lichtabstrahlwinkels (4) des Leuchtmittels (3) angeordnet ist, wobei der Infrarotsensor ( 6 ) gegenüber Lichtstrahlung des Leuchtmittels mittels einer Abschirmeinrichtung abgeschirmt ist, die Abschirmeinrichtung einen dichroitischen Spiegel oder Filter aufweist, und dem Infrarotsensor ( 6 ) ein zweiter Infrarotsensor ( 10 ) zur Ermittlung und Kompensation der Umgebungswärmestrahlung zugeordnet ist, wobei der zweite Sensor in Richtung der Umgebungswämestrahlung gerichtet ist und diese erfasst, wobei das Verfahren die folgenden Schritte aufweist:
i) Messen einer Wärmestrahlung des Leuchtmittels ( 3 ) mittels des Infrarotsensors ( 6 ),
ii) Auswerten des Infrarotsensorsignals zur Temperaturbestimmung des Leuchtmittels (3) und
iii) Messen der Umgebungswärmestrahlung mittels eines zweiten Infrarotsensors ( 10 ) zur Kompensation der Umgebungswärme

13. Verfahren nach Anspruch 12, **gekennzeichnet durch** den weiteren Schritt:
- Abschalten des Leuchtmittels ( 3 ), wenn der gemessene Temperaturwert einen vorgegebenen maximalen Temperaturgrenzwert überschreitet.

14. Verfahren nach Anspruch 12 oder 13, **gekennzeichnet durch** den weiteren Schritt:
- Abschirmen des Infrarotsensors ( 6 ) gegenüber Umgebungswärmestrahlung.

15. Verfahren nach einem der Ansprüche 12 bis 14, **gekennzeichnet durch** den weiteren Schritt:
- Zuordnen des Infrarotsensors ( 6, 10 ) zu einem LED-Strahler, einem LED-Spot, einem LED-Stripe, einem LED-Leuchtband oder dergleichen als Leuchtmittel ( 3 ).

16. Verfahren nach einem der Ansprüche 12 bis 14, **gekennzeichnet durch** den weiteren Schritt:
- Reduzieren des Leistungsumsatzes des Leuchtmittels, wenn der gemessene Temperaturwert einen vorgegebenen maximalen Temperaturgrenzwert überschreitet, insbesondere bis ein vorgegebener Abkühltemperaturwert erreicht ist.

17. Verfahren nach einem der Ansprüche 12 bis 13, **dadurch gekennzeichnet, dass** im Schritt ii) die Infrarottemperaturbestimmung durch Bestimmung von Abweichungen im Verhältnis von emittiertem Lichtspektrum zum Infrarotspektrum bei einer bestimmten Umgebungstemperatur erfolgt.

18. Verfahren nach einem der Ansprüche 12 bis 17, **dadurch gekennzeichnet, dass** zur Temperaturbestimmung eine Verschiebung der Infrarotverteilung gemessen wird.

## Claims

1. A light fixture (1) with at least one light-emitting diode (LED) (2) as illuminant (3), which LED (2) has a limited light-emitting angle (4) for emitted light beams, wherein:
the light fixture has an infrared sensor (6) which is arranged within the light-emitting angle and is assigned to the illuminant (3) for determining a temperature thereof,
the infrared sensor (6) is shielded from light radiation of the illuminant by means of a shielding device, and the shielding device has a dichroic mirror or filter, and
a second infrared sensor (10) is assigned to the infrared sensor (6) for ascertaining and compensating the ambient heat radiation;
wherein the second infrared sensor (10) is directed toward the ambient heat radiation and detects it.

2. The light fixture according to Claim 1, wherein the infrared sensor (6) is directed toward the illuminant (3) in an edge region of the light cone or effective light flux.

3. The light fixture according to Claim 1 or 2, wherein the illuminant (3) is an LED emitter, an LED spot, an LED stripe, an LED luminous tape, or the like.

4. The light fixture according to any of the preceding claims, wherein the infrared sensor (6) is connected to an evaluation/control device (8) for determining the temperature and controlling the illuminant.

5. The light fixture according to any of the preceding claims, wherein the infrared sensor (6) is arranged in a light fixture housing (9) of the light fixture (1).

6. The light fixture according to any of the preceding claims, wherein a maximum temperature limit value is specified for the evaluation/control device (8) as a switch-off value.

7. The light fixture according to any of the preceding claims, wherein a power reduction of the light fixture for capping the temperature can be carried out after a specified temperature has been measured.

8. The light fixture according to any of the preceding claims, wherein the infrared sensor (6) is shielded from ambient heat radiation by means of a shielding device.

9. The light fixture according to Claim 8, wherein the shielding device has a reflector.

10. The light fixture according to any of the preceding claims, wherein the infrared sensor (6, 10) is arranged adjustably.

11. The light fixture according to any of the preceding claims, wherein the infrared sensor (6) is a ratio pyrometer or dual-beam pyrometer.

12. A method for monitoring the temperature of an LED (2) as an illuminant (3) of a light fixture (1), wherein the light fixture has an infrared sensor (6) which is arranged within a light-emitting angle (4) of the illuminant (3), wherein the infrared sensor (6) is shielded from light radiation of the illuminant by means of a shielding device, the shielding device has a dichroic mirror or filter, and a second infrared sensor (10) is assigned to the infrared sensor (6) for ascertaining and compensating the ambient heat radiation, wherein the second sensor is directed toward the ambient heat radiation and detects it, wherein the method comprises the following steps:
i) Measuring a heat radiation of the illuminant (3) by means of the infrared sensor (6),
ii) Evaluating the infrared sensor signal for determining the temperature of the illuminant (3), and
iii) Measuring the ambient heat radiation by means of a second infrared sensor (10) for compensating the ambient heat.

13. The method according to Claim 12, **characterized by** the further step:
- Switching off the illuminant (3) when the measured temperature value exceeds a specified maximum temperature limit value.

14. The method according to Claim 12 or 13, **characterized by** the further step:
- Shielding the infrared sensor (6) from ambient heat radiation.

15. The method according to any of Claims 12 to 14, **characterized by** the further step:
- Assigning the infrared sensor (6, 10) to an LED emitter, an LED spot, an LED stripe, an LED luminous tape, or the like as the illuminant (3).

16. The method according to any of Claims 12 to 14, **characterized by** the further step:
- Reducing the power conversion of the illuminant when the measured temperature value exceeds a specified maximum temperature limit value, in particular until a specified cooling temperature value is reached.

17. The method according to any of Claims 12 to 13, **characterized in that** in step ii), the infrared temperature determination takes place by determining deviations in the ratio of emitted light spectrum to infrared spectrum at a specific ambient temperature.

18. The method according to any of Claims 12 to 17, **characterized in that** for determining the temperature, a shift in the infrared distribution is measured.

## Revendications

1. Luminaire (1) comprenant au moins une diode électroluminescente (DEL) (2) comme source d'éclairage (3), ladite DEL (2) présentant un angle de rayonnement lumineux (4) limité pour les rayons lumineux émis, dans lequel :
le luminaire présente un capteur infrarouge (6), lequel est disposé à l'intérieur de l'angle de rayonnement lumineux et est associé à la source d'éclairage (3) pour la détermination d'une température de celle-ci,
le capteur infrarouge (6) est blindé par rapport au rayonnement lumineux de la source d'éclairage au moyen d'un dispositif de blindage et le dispositif de blindage présente un miroir ou filtre dichroïque et
un second capteur infrarouge (10) est associé au capteur infrarouge (6) pour la détection et la compensation du rayonnement thermique ambiant ;
dans lequel le second capteur infrarouge (10) est orienté dans la direction du rayonnement thermique ambiant et détecte celui-ci.

2. Luminaire selon la revendication 1, dans lequel le capteur infrarouge (6) est orienté dans la direction de la source d'éclairage (3) dans une zone de bordure du cône lumineux ou du flux lumineux actif.

3. Luminaire selon la revendication 1 ou 2, dans lequel la source d'éclairage (3) est un projecteur à DEL, un spot à DEL, une barrette de DEL, une bande lumineuse de DEL ou similaire.

4. Luminaire selon l'une quelconque des revendications précédentes, dans lequel le capteur infrarouge (6) est connecté à un dispositif d'évaluation/de commande (8) pour la détermination de température et la commande de la source d'éclairage.

5. Luminaire selon l'une quelconque des revendications précédentes, dans lequel le capteur infrarouge (6) est disposé dans un boîtier de luminaire (9) du luminaire (1).

6. Luminaire selon l'une quelconque des revendications précédentes, dans lequel une valeur limite de température maximale est prédéfinie comme valeur de coupure pour le dispositif d'évaluation/de commande (8).

7. Luminaire selon l'une quelconque des revendications précédentes, dans lequel, après la mesure d'une température prédéfinie, une réduction de puissance du luminaire peut être réalisée pour le recouvrement de la température.

8. Luminaire selon l'une quelconque des revendications précédentes, dans lequel le capteur infrarouge (6) est blindé contre le rayonnement thermique ambiant au moyen d'un dispositif de blindage.

9. Luminaire selon la revendication 8, dans lequel le dispositif de blindage présente un réflecteur.

10. Luminaire selon l'une quelconque des revendications précédentes, dans lequel le capteur infrarouge (6, 10) est disposé de manière réglable.

11. Luminaire selon l'une quelconque des revendications précédentes, dans lequel le capteur infrarouge (6) est un pyromètre de rapport ou à 2 faisceaux.

12. Procédé de surveillance de température d'une DEL (2) comme source d'éclairage (3) d'un luminaire (1), dans lequel le luminaire présente un capteur infrarouge (6), lequel est disposé à l'intérieur d'un angle de rayonnement lumineux (4) de la source d'éclairage (3), dans lequel le capteur infrarouge (6) est blindé par rapport au rayonnement lumineux de la source d'éclairage au moyen d'un dispositif de blindage, le dispositif de blindage présente un miroir ou filtre dichroïque et le capteur infrarouge (6) est associé à un second capteur infrarouge (10) pour la détermination et la compensation du rayonnement thermique ambiant, dans lequel le second capteur est orienté dans la direction du rayonnement thermique ambiant et détecte celui-ci, dans lequel le procédé présente les étapes suivantes :
i) mesure d'un rayonnement thermique de la source d'éclairage (3) au moyen du capteur infrarouge (6),
ii) évaluation du signal du capteur infrarouge pour la détermination de la température de la source d'éclairage (3) et
iii) mesure du rayonnement thermique ambiant au moyen d'un second capteur infrarouge (10) pour la compensation de la chaleur ambiante

13. Procédé selon la revendication 12, **caractérisé par** l'étape supplémentaire :
- désactivation de la source d'éclairage (3), lorsque la valeur de température mesurée dépasse une valeur limite de température maximale prédéfinie.

14. Procédé selon la revendication 12 ou 13, **caractérisé par** l'étape supplémentaire :
- blindage du capteur infrarouge (6) contre le rayonnement thermique ambiant.

15. Procédé selon l'une quelconque des revendications 12 à 14, **caractérisé par** l'étape supplémentaire :
- association du capteur infrarouge (6, 10) à un projecteur à DEL, un spot à DEL, une barrette de DEL, une bande lumineuse de DEL ou similaire comme source d'éclairage (3).

16. Procédé selon l'une quelconque des revendications 12 à 14, **caractérisé par** l'étape supplémentaire :
- réduction de la consommation de puissance de la source d'éclairage, lorsque la valeur de température mesurée dépasse une valeur limite de température maximale prédéfinie, en particulier jusqu'à ce qu'une valeur de température de refroidissement prédéfinie soit atteinte.

17. Procédé selon l'une quelconque des revendications 12 à 13, **caractérisé en ce que**, dans l'étape ii) la détermination de la température infrarouge est effectuée par la détermination d'écarts dans le rapport du spectre lumineux émis au spectre infrarouge à une température ambiante déterminée.

18. Procédé selon l'une quelconque des revendication 12 à 17, **caractérisé en ce qu'**un décalage de la distribution infrarouge est mesuré pour la détermination de la température.
